# EUROPÄISCHE PATENTSCHRIFT

(11) **EP 2 093 127 B1**
(45) Veröffentlichungstag und Bekanntmachung des Hinweises auf die Patenterteilung: **13.04.2011**
(21) Anmeldenummer: 09002101.5
(22) Anmeldetag: 16.02.2009
(51) Int. Cl.: B62D 6/10, B62D 15/02

(54) **Lenkgetriebe mit Sensor**
Steering gear with sensor
Mécanisme de direction doté d'un capteur

(30) Priorität: 19.02.2008 DE 102008009772
(43) Veröffentlichungstag der Anmeldung: 26.08.2009
(73) Patentinhaber: TRW Automotive GmbH, 73553 Alfdorf (DE)
(72) Erfinder: Philippi, Andreas, 47057 Duisburg (DE); Eberhart, Eugen, 72351 Geislingen-Binsdorf (DE); Watzlawek, Gregor, 40545 Düsseldorf (DE)
(74) Vertreter: Prinz & Partner

(56) Entgegenhaltungen:
- WO-A-2005/058671
- DE-A1- 10 248 695
- DE-A1-102005 010 636
- FR-A- 2 502 570

## Beschreibung

Die Erfindung betrifft ein Lenkgetriebe für eine Servolenkung, gemäß dem Oberbegriff des Anspruchs 1.

Ein solches Lenkgetriebe weist in einem Gehäuse eine Zahnstange auf, in die ein Ritzel eingreift. Das Ritzel gehört zu einer Eingangswelle, die vom Lenkrad betätigt werden kann. Durch Drehung des Ritzels wird die Zahnstange entlang ihrer Längsrichtung im Gehäuse verstellt. Das Ritzel ist im Gehäuse des Lenkgetriebes durch zwei Wälzlager gelagert, die auf der einen und der anderen Seite des Ritzels angeordnet sind. Üblicherweise wird das am von der Eingangswelle abgewandten Ende der Eingangswelle angeordnete Wälzlager als Loslager ausgeführt, und das auf der anderen Seite des Ritzels, also zum Lenkrad hin angeordnete Wälzlager wird als Festlager ausgeführt. Dies ermöglicht, die Eingangswelle zusammen mit dem Ritzel von einer Seite im Gehäuse des Lenkgetriebes zu montieren, nämlich von der dem Lenkrad zugewandten Seite, indem die Eingangswelle zusammen mit Ritzel und Festlager in das bereits mit dem Loslager versehene Gehäuse eingeschoben und anschließend das Festlager am Gehäuse festgelegt wird. Diese Montageweise ist selbst dann kein Problem, wenn die Eingangswelle mit einem hydraulischen Servoventil versehen ist, da dessen Durchmesser meist kleiner ist als der Durchmesser des als Festlager dienenden Wälzlagers. Das Festlager kann also mit geringem Aufwand im Gehäuse verspannt werden, in dem ein Gehäuseteil aufgesetzt wird, welches das hydraulische Servoventil umgibt und dann den Außenring des als Festlager wirkenden Wälzlagers gegen das Gehäuse des Lenkgetriebes verspannt.

Diese Art der Montage ist jedoch nicht mehr möglich bei Lenkgetrieben für elektrische oder elektrohydraulische Servolenkungen, die kein hydraulisches Servoventil aufweisen. Bei diesen Servolenkungen wird anstelle des hydraulischen Servoventils, das in Abhängigkeit vom aufgebrachten Lenkmoment eine Unterstützungskraft bestimmt, ein Sensor verwendet, der das aufgebracht Lenkmoment und/oder den Lenkwinkel erfaßt. Diese Sensoren weisen jedoch einen vergleichsweise großen Außendurchmesser auf, so daß der Außenring des als Festlager dienenden Wälzlagers nicht mehr mit einem aufgesetzten Gehäuseteil gegen das Gehäuse des Lenkgetriebes gespannt werden kann.

Um das von Lenkgetrieben für hydraulische Servolenkungen bekannte und bewährte Montagekonzept beizubehalten und die Befestigung des Festlagers zu ermöglichen, wird ein Zwischenelement eingesetzt, das sich in radialer Richtung über den Umfang des Sensors nach außen erstreckt, so dass das Festlager vom Sensorgehäuse gegen das Gehäuse des Lenkgetriebes gespannt werden kann, wie dies beispielsweise in der WO 2005/058671 A1 gezeigt ist, die den nächstkommenden Stand der Technik darstellt und die im Oberbegriff des Anspruchs 1 definierten Merkmale offenbart. Es ist dadurch nicht erforderlich, als Festlager Wälzlager mit einem extrem großen Durchmesser einzusetzen. Bei den aus dem Stand der Technik bekannten Lenkgetrieben ist allerdings die Montage des Spannelements sehr aufwändig. Zudem besteht das Risiko, dass das zwischen dem Festlager und dem Sensor angeordnete Spannelement beim Transport der Eingangswelle vor der Montage den Sensor beschädigt.

Aufgabe der Erfindung ist es, ein gattungsgemäßes Lenkgetriebe zu schaffen, dass eine einfache Montage des Spannelements ermöglicht und den Sensor vor Beschädigungen schützt.

Erfindungsgemäß wird dies dadurch gelöst, dass das Spannelement eine geschlitzte Scheibe ist. Dies ermöglicht, das Spannelement mit geringem Aufwand nachträglich zu montieren. Zudem ist so das Risiko minimiert, dass das zwischen dem Festlager und dem Sensor angeordnete Spannelement beim Transport der Eingangswelle vor der Montage den Sensor beschädigt.

Gemäß einer bevorzugten Ausführungsform ist vorgesehen, dass das Spannelement C-förmig ist.

Vorzugsweise ist vorgesehen, daß das Spannelement eine Aufnahme für den Außenring des Festlagers aufweist. Dies gewährleistet die korrekte Positionierung des Spannelements bei der Montage.

Gemäß einer bevorzugten Ausführungsform der Erfindung ist vorgesehen, daß das Sensorgehäuse einen Adapter und eine Endkappe aufweist. Dies ermöglicht zum einen, unterschiedliche Materialien für die verschiedenen Teile des Sensorgehäuses zu verwenden. Beispielsweise kann der Adapter ein Abschnitt eines extrudierten Profilteils sein, insbesondere aus einer Aluminiumlegierung, oder kann aus Kunststoff bestehen. Die Endkappe kann ein Tiefziehteil, ein Schmiedeteil, ein Gußteil oder ein Kunststoffteil sein. Zum anderen ermöglicht die Ausführung des Sensorgehäuses aus mehreren Teilen, eine standardisierte Endkappe zu verwenden, die zusammen mit Adapter von unterschiedlichen Längen ein Gehäuse für unterschiedliche Sensoren bildet.

Vorzugsweise ist vorgesehen, daß zwischen der Endkappe und dem Adapter ein Zentrierring angeordnet ist. Dieser gewährleistet die korrekte Positionierung des Gehäuses relativ zum Sensor. Der Zentrierring kann dabei auch in den Adapter integriert werden.

Vorzugsweise ist vorgesehen, daß die Endkappe in unterschiedlichen Winkelausrichtungen am Adapter angebracht werden kann. Dies ermöglicht, den Stecker zum Anschließen des Sensors an den Kabelbaum des Fahrzeugs in der für den jeweiligen Fahrtzeugtyp optimalen Ausrichtung am Lenkgetriebe anzubringen.

Wenn ein einteiliges Sensorgehäuse verwendet wird, ist dieses vorzugsweise topfförmig ausgebildet. Der vom "Boden" des Topfes entfernte Rand dient dazu, über das Spannelement das Festlager am Gehäuse festzuspannen.

Die Erfindung wird nachfolgend anhand verschiedener Ausführungsformen beschrieben, die in den beigefügten Zeichnungen dargestellt sind. In diesen zeigen:
- Figur 1 ein Lenkgetriebe gemäß einer ersten Ausführungsform in einer teilgeschnittenen Seitenansicht;
- Figur 2 eine Draufsicht auf das beim Lenkgetriebe von Figur 1 verwendete Spannelement;
- Figur 3 eine teilgeschnittene Explosionsansicht des Lenkgetriebes von Figur 1;
- Figur 4 eine Explosionsansicht eines Lenkgetriebes gemäß einer zweiten Ausführungsform;
- Figur 5 eine Draufsicht auf einen bei dem Lenkgetriebe von Figur 4 verwendeten Adapater; und
- Figur 6 eine Seitenansicht des Adapters von Figur 5.

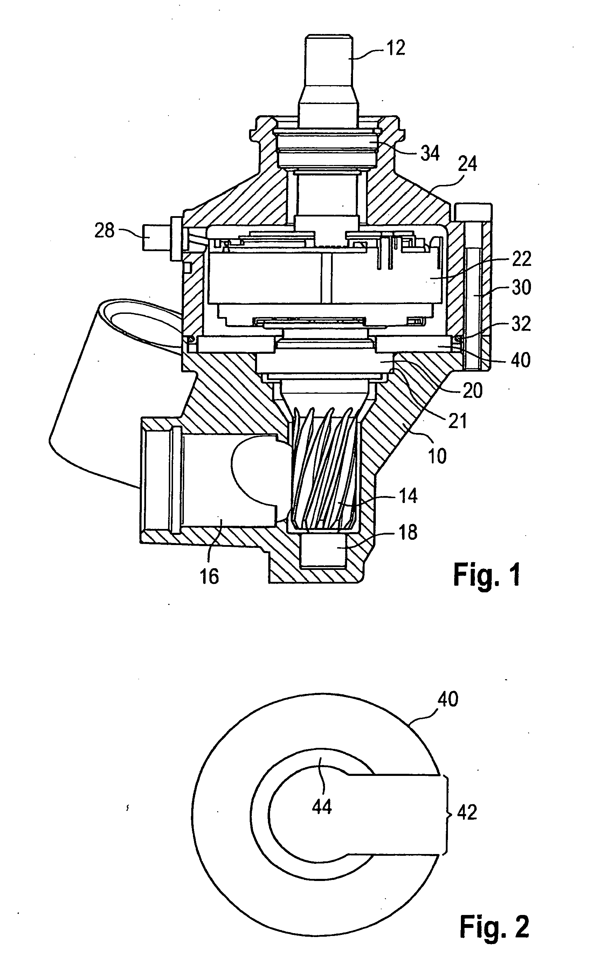

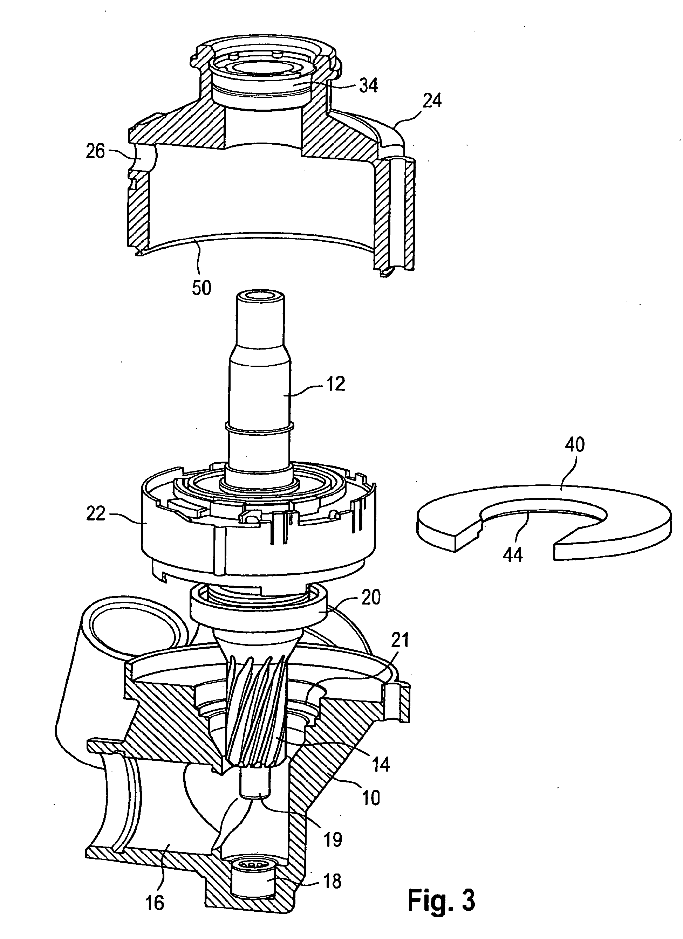

In den Figuren 1 bis 3 ist ein Lenkgetriebe gemäß einer ersten Ausführungsform gezeigt. Es enthält ein Gehäuse 10, in dem eine Eingangswelle 12 drehbar angeordnet ist. Im Inneren der Eingangswelle 12 ist ein Torsionsstab angeordnet, der in Abhängigkeit vom aufgebrachten Lenkmoment tordiert wird. Dies ist allgemein bekannt, so daß es hier nicht weiter erläutert wird.

Die Eingangswelle ist mit einem Ritzel 14 verbunden, das in eine (hier nicht gezeigte) Zahnstange eingreift, die von einem in einer Druckstückaufnahme 16 angeordneten (nicht dargestellten) Druckstück gegen das Ritzel 14 beaufschlagt wird. Das Ritzel 14 ist im Gehäuse 10 durch ein Loslager 18 und ein Festlager 20 gelagert. Das Loslager 18 sitzt "unterhalb" des Ritzels 14 auf einem Fortsatz 19 am Ritzel 14, ist in einer Aufnahme im Gehäuse 10 aufgenommen und kann radiale Lasten aufnehmen, die auf das Ritzel 14 wirken. Das Festlager 20 ist auf der anderen Seite des Ritzels 14 angeordnet. Die Lagerung 34 der Eingangswelle wird hier aus Gründen der Vereinfachung nicht weiter erläutert.

Auf der vom Ritzel 14 abgewandten Seite des Festlagers 20 ist auf der Eingangswelle 12 ein Sensor 22 angebracht, der die Relativdrehung zwischen der Eingangswelle und dem Ritzel mißt. Hieraus kann das aufgebrachte Moment und der Winkel errechnet werden. Der Außendurchmesser des Sensors 22 ist deutlich größer als der Außendurchmesser des Außenringes des Festlagers 20.

Um den Sensor herum ist ein Sensorgehäuse 24 angeordnet, das topfförmig ausgebildet ist und einen Durchgang 26 für einen Stecker 28 aufweist, mit dem der Sensor 22 an einen Kabelbaum des Fahrzeugs bzw. zum Motor des Lenkgetriebes angeschlossen werden kann. Das Sensorgehäuse 24 ist durch drei Schraubbolzen 30 mit dem Gehäuse 10 des Lenkgetriebes verbunden. Zur Abdichtung können O-Ringe 32 verwendet werden.

Damit es trotz des geringeren Durchmessers des Festlagers 20 im Vergleich mit dem Durchmesser des Sensors 22 möglich ist, das Festlager im Gehäuse 10 festzulegen, ist ein Spannelement 40 vorgesehen, das als geschlitzte C-förmige Scheibe aus Metall ausgeführt ist. Sie kann ein Stanzteil sein und weist einen Schlitz 42 auf, der so breit ist, daß sie nachträglich zwischen dem Festlager 20 und dem Sensor 22 auf die Eingangswelle 12 aufgeschoben werden kann. Ferner ist eine Aufnahme 44 für den Außenring des Festlagers 20 vorgesehen, die als umlaufender Absatz an dem Spannelement 40 ausgebildet ist. Das Spannelement 40 wird erst bei der Endmontage auf die vormontierte Baugruppe aufgeschoben, die aus der Eingangswelle 12, dem Ritzel 14, dem Sensor 22 und dem Festlager besteht, so daß der Außenring des Festlagers 20 in der Aufnahme 44 des Spannelements 40 zu liegen kommt. Dann wird die Eingangswelle mit dem Ritzel in das Gehäuse 10 eingesetzt, so daß es in das Loslager 18 eingeschoben wird. Anschließend wird das Sensorgehäuse 24 aufgesetzt, das mit einem umlaufenden Absatz 50 von oben auf den Außenrand des Spannelementes 40 drückt und damit indirekt das Festlager 20 gegen das Gehäuse 10 spannt. Das Festlager 20 ist dadurch in axialer Richtung fest zwischen dem Spannelement 40 und einem Anlagebund 21 im Gehäuse 10 festgelegt. Dadurch ist auch das Ritzel 14 in axialer Richtung festgelegt.

Die Aufnahme 44 am Spannelement 40 kann auch auf beiden Seiten vorgesehen sein, so daß die Montage vereinfacht ist.

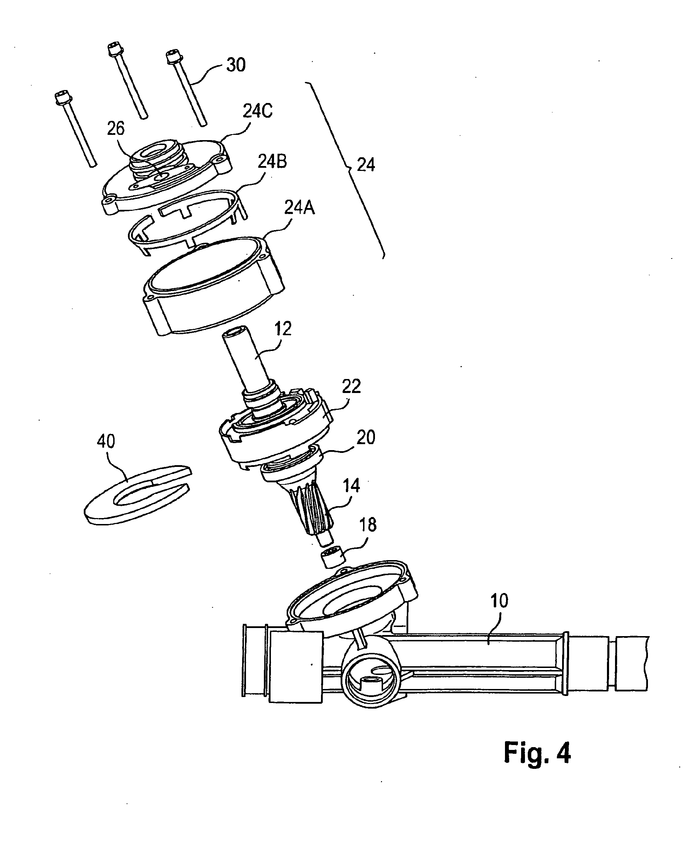

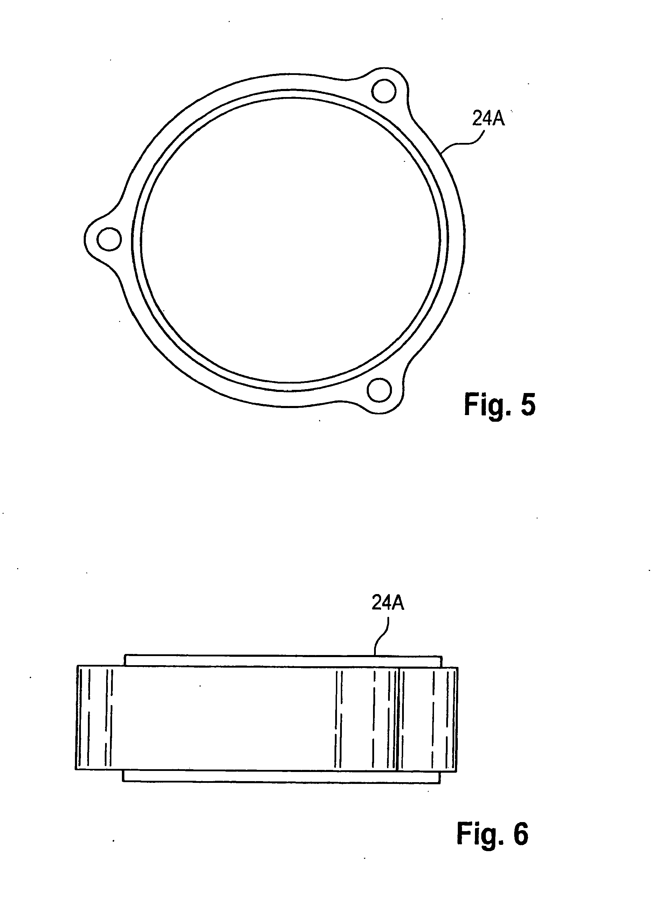

In den Figuren 4 bis 6 ist ein Lenkgetriebe gemäß einer zweiten Ausführungsform gezeigt. Für die von der ersten Ausführungsform bekannten Bauelemente werden dieselben Bezugszeichen verwendet.

Der wesentliche Unterschied zwischen der ersten und der zweiten Ausführungsform besteht darin, daß bei der zweiten Ausführungsform ein mehrteiliges Sensorgehäuse 24 verwendet wird. Es besteht hier aus einem allgemein ringförmigen Adapter 24A, einem Zentrierring 24B und einer Endkappe 24C.

Der Adapter 24A kann als Profilteil aus einer Aluminiumlegierung oder aus Kunststoff hergestellt sein. Er ist winkelsymmetrisch, so daß er in verschiedenen Ausrichtungen montiert werden kann. In Abhängigkeit vom jeweils eingesetzten Sensor 22 wird ein Adapter mit geeigneter Länge verwendet. Die Endkappe 24C, die aus Metall oder Kunststoff bestehen kann, kann unabhängig vom jeweiligen Sensor 22 identisch ausgeführt sein. Der Zentrierring 24B wird zwischen dem Adapter 24A und der Endkappe 24C angeordnet und gewährleistet die korrekte Zentrierung und Befestigung des Sensors im Gehäuse. Ein weiterer Vorteil der Verwendung eines mehrteiligen Gehäuses besteht darin, daß die Endkappe 24C in verschiedenen Winkelausrichtungen am Gehäuse 10 des Lenkgetriebes angebracht werden kann. Dies ermöglicht, den Durchgang 26 in einer für den jeweiligen Fahrzeugtyp optimalen Ausrichtung anzuordnen.

Auch bei der zweiten Ausführungsform wird das Festlager 20 mittels des Spannelementes 40 am Gehäuse 10 festgelegt. Dies geschieht mittels des Adapters 24A, der auf den Außenrand des Spannelementes 40 drückt.

## Patentansprüche

1. Lenkgetriebe mit einem Gehäuse (10), einer Eingangswelle (12), die ein Ritzel (14) aufweist, einem Sensor (22), der auf der Eingangswelle angeordnet ist, einem Festlager (20), das zwischen dem Sensor (22) und dem Ritzel (14) angeordnet ist, einem Sensorgehäuse (24), das den Sensor (22) umgibt, und einem Spannelement (40), an dem das Sensorgehäuse (24) anliegt und das das Festlager (20) gegen das Gehäuse beaufschlagt,
**dadurch gekennzeichnet, dass** das Spannelement (40) eine geschlitzte Scheibe ist.

2. Lenkgetriebe nach Anspruch 1, **dadurch gekennzeichnet, daß** das Spannelement (40) C-förmig ist.

3. Lenkgetriebe nach einem der vorhergehenden Ansprüche, **dadurch gekennzeichnet, daß** das Spannelement (40) eine Aufnahme (44) für den Außenring des Festlagers (20) aufweist.

4. Lenkgetriebe nach einem der vorhergehenden Ansprüche, **dadurch gekennzeichnet, daß** das Sensorgehäuse (24) einen Adapter (24A) und eine Endkappe (24C) aufweist.

5. Lenkgetriebe nach Anspruch 4, **dadurch gekennzeichnet, daß** die Endkappe (24C) in verschiedenen Winkelausrichtungen am Adapter (24A) angebracht werden kann.

6. Lenkgetriebe nach Anspruch 4 oder Anspruch 5, **dadurch gekennzeichnet, daß** zwischen der Endkappe (24C) und dem Adapter (24A) ein Zentrierring (248) angeordnet ist.

7. Lenkgetriebe nach Anspruch 6, **dadurch gekennzeichnet, daß** der Zentrierring (24B) in den Adapter (24A) integriert ist.

8. Lenkgetriebe nach einem der Ansprüche 4 bis 7, **dadurch gekennzeichnet, daß** der Adapter (24A) ein Abschnitt eines extrudierten Profilteils ist, insbesondere aus einer Aluminiumlegierung.

9. Lenkgetriebe nach einem der Ansprüche 4 bis 7, **dadurch gekennzeichnet, daß** der Adapter (24A) aus Kunststoff besteht.

10. Lenkgetriebe nach einem der Ansprüche 4 bis 9, **dadurch gekennzeichnet, daß** die Endkappe (24C) ein Tiefziehteil, ein Schmiedeteil, ein Gußteil oder ein Kunststoffteil ist.

11. Lenkgetriebe nach einem der Ansprüche 1 bis 3, **dadurch gekennzeichnet, daß** das Sensorgehäuse (24) topfförmig ist.

12. Lenkgetriebe nach einem der vorhergehenden Ansprüche, **dadurch gekennzeichnet, daß** auf der vom Sensor (22) abgewandten Seite des Ritzels (14) ein Eingangswellen-Loslager (18) angeordnet ist.

## Claims

1. A steering gear comprising a housing (10), an input shaft (12) having a pinion (14), a sensor (22) arranged on the input shaft, a fixed bearing (20) arranged between the sensor (22) and the pinion (14), a sensor housing (24) surrounding the sensor (22), and a clamping member (40) against which the sensor housing (24) rests and which urges the fixed bearing (20) against the housing,
**characterized in that** the clamping member (40) is a slotted disk.

2. The steering gear according to claim 1, **characterized in that** the clamping member (40) is C-shaped.

3. The steering gear according to either of the preceding claims, **characterized in that** the clamping member (40) has a mount (44) for the outer ring of the fixed bearing (20).

4. The steering gear according to any of the preceding claims, **characterized in that** the sensor housing (24) has an adapter (24A) and an end cap (24C).

5. The steering gear according to claim 4, **characterized in that** the end cap (24C) may be fitted to the adapter (24A) in different angular orientations.

6. The steering gear according to claim 4 or claim 5, **characterized in that** a centering ring (24B) is arranged between the end cap (24C) and the adapter (24A).

7. The steering gear according to claim 6, **characterized in that** the centering ring (24B) is integrated in the adapter (24A).

8. The steering gear according to any of claims 4 to 7, **characterized in that** the adapter (24A) is a portion of an extruded profiled part, in particular of an aluminum alloy.

9. The steering gear according to any of claims 4 to 7, **characterized in that** the adapter (24A) is made of plastic.

10. The steering gear according to any of claims 4 to 9, **characterized in that** the end cap (24C) is a deep-drawn part, a forged part, a cast part, or a plastic part.

11. The steering gear according to any of claims 1 to 3, **characterized in that** the sensor housing (24) is pot-shaped.

12. The steering gear according to any of the preceding claims, **characterized in that** an input shaft movable bearing (18) is arranged on the side of the pinion (14) facing away from the sensor (22).

## Revendications

1. Mécanisme de direction comportant un carter (10), un arbre d'entrée (12) qui présente un pignon (14), un capteur (22) qui est agencé sur l'arbre d'entrée, un palier fixe (20) qui est agencé entre le capteur (22) et le pignon (14), un boîtier de capteur (24) qui entoure le capteur (22) et un élément de serrage (40) sur lequel le boîtier de capteur (24) est en appui et qui sollicite le palier fixe (20) contre le carter,
**caractérisé en ce que** l'élément de serrage (40) est un disque fendu.

2. Mécanisme de direction selon la revendication 1, **caractérisé en ce que** l'élément de serrage (40) a la forme d'un C.

3. Mécanisme de direction selon l'une des revendications précédentes, **caractérisé en ce que** l'élément de serrage (40) présente un logement (44) pour la bague extérieure du palier fixe (20).

4. Mécanisme de direction selon l'une des revendications précédentes, **caractérisé en ce que** le boîtier de capteur (24) présente un adaptateur (24A) et un chapeau d'extrémité (24C).

5. Mécanisme de direction selon la revendication 4, **caractérisé en ce que** le chapeau d'extrémité (24C) peut être monté sur l'adaptateur (24A) dans différentes directions angulaires.

6. Mécanisme de direction selon la revendication 4 ou 5, **caractérisé en ce qu'**une bague de centrage (24B) est agencée entre le chapeau d'extrémité (24C) et l'adaptateur (24A).

7. Mécanisme de direction selon la revendication 6, **caractérisé en ce que** la bague de centrage (24B) est intégrée dans l'adaptateur (24A).

8. Mécanisme de direction selon l'une des revendications 4 à 7, **caractérisé en ce que** l'adaptateur (24A) est un tronçon d'une pièce profilée extrudée, en particulier en un alliage d'aluminium.

9. Mécanisme de direction selon l'une des revendications 4 à 7, **caractérisé en ce que** l'adaptateur (24A) est en matière plastique.

10. Mécanisme de direction selon l'une des revendications 4 à 9, **caractérisé en ce que** le chapeau d'extrémité (24C) est une pièce emboutie, une pièce forgée, une pièce moulée ou une pièce en matière plastique.

11. Mécanisme de direction selon l'une des revendications 1 à 3, **caractérisé en ce que** le boîtier de capteur (24) est en forme de pot.

12. Mécanisme de direction selon l'une des revendications précédentes, **caractérisé en ce qu'**un palier libre d'arbre d'entrée (18) est agencé sur la face du pignon (14) qui est détournée du capteur (22).
